# EUROPÄISCHE PATENTSCHRIFT

(11) **EP 2 128 696 B1**
(45) Veröffentlichungstag und Bekanntmachung des Hinweises auf die Patenterteilung: **21.09.2016**
(21) Anmeldenummer: 08157102.8
(22) Anmeldetag: 28.05.2008
(51) Int. Cl.: G03B 42/02, G03B 42/04

(54) **Vorrichtung zum Auslesen von in Speicherleuchtstoffplatten gespeicherten Röntgeninformationen**
Device for reading out x-ray information stored in storage phosphor plates
Dispositif destiné à la lecture d'informations radiographiques stockées dans des plaques fluorescentes de mémoire

(43) Veröffentlichungstag der Anmeldung: 02.12.2009
(73) Patentinhaber: Agfa HealthCare N.V., 2640 Mortsel (BE)
(72) Erfinder: Hölzl, Johannes, D-85630 Grasbrunn (DE); Schindlbeck, Günther, D-81545 München (DE); Voigtländer, Volkmar, D-82223 Eichenau (DE); Hartmann, Thomas, D-82449 Uffing am Staffelsee (DE); Auer, Franz, D-84056 Rottenburg (DE); Werkstetter, Rudolf, D-84567 Perach (DE)
(74) Vertreter: Linsmeier, Josef

(56) Entgegenhaltungen:
- EP-A- 0 698 813
- JP-A- 4 042 222
- US-A1- 2006 131 525
- US-A1- 2006 131 526
- US-A1- 2006 131 527

## Beschreibung

Die vorliegende Erfindung betrifft eine Vorrichtung zum Auslesen von in Speicherleuchtstoffplatten gespeicherten Röntgeninformationen.

Im Bereich der Computer-Radiografie (CR) wird für medizinische Zwecke von einem Objekt, beispielsweise einem Patienten oder einem Körperteil des Patienten, mittels Röntgenbestrahlung ein Bild erzeugt, das in einer Speicherleuchtstoffschicht als latentes Röntgenbild gespeichert wird. Zum Auslesen der in der Speicherleuchtstoffschicht abgespeicherten Bildinformationen wird die Speicherleuchtstoffschicht mittels einer Bestrahlungseinrichtung angeregt. Die Speicherleuchtstoffschicht emittiert aufgrund dieser Anregung Emissionsstrahlung, die eine Intensität entsprechend der Menge der in der Speicherleuchtstoffschicht abgespeicherten Bildinformatiorien des Röntgenbildes aufweist. Die von der Speicherleuchtstoffschicht ausgesandte Emissionsstrahlung wird von einem Detektor erfasst und in elektrische Signale umgewandelt, die ein Abbild der Bildinformationen enthalten. Die elektrischen Signale werden weiterverarbeitet und die in der Speicherleuchtstoffschicht abgespeicherten Bildinformationen anschließend sichtbar gemacht. Die Bildinformationen können beispielsweise direkt auf einem Monitor dargestellt oder mittels eines speziell für Röntgenbilder verwendbaren Druckers auf einen fotografischen Röntgenfilm geschrieben werden.

Eine Vorrichtung zum Auslesen von in Speicherleuchtstoffplatten gespeicherten Röntgeninformationen ist aus der US 2006/0131525 A1 bekannt. Diese Vorrichtung enthält eine Eingabeeinheit zum Eingeben von mehreren, hintereinander stapelbaren Kassetten mit auszulesenden Speicherleuchtstoffplatten und einer neben der Eingabeeinheit vorgesehenen Ausgabeeinheit zum Ausgeben von Kassetten. Eine Ausleseeinheit befindet sich im Innern der Vorrichtung unterhalb der Ausgabeeinheit. Zum Auslesen der in den Kassetten befindlichen Speicherleuchtstoffplatten werden die in die Eingabeeinheit eingegebenen Kassetten in die Ausgabeeinheit geschoben. Dort wird der jeweiligen Kassette die in ihr befindliche Speicherleuchtstoffplatte entnommen und nach unten zum Auslesen in die Ausleseeinheit transportiert. Die ausgelesene Speicherleuchtstoffplatte wird anschließend wieder in die Kassette zurücktransportiert und zusammen mit dieser in der Ausgabeeinheit nach vorne verfahren, um für die nachfolgende, auszulesende Kassette Platz zu machen.

Bei dieser Vorrichtung kann die in einer nachfolgenden Kassette befindliche Speicherleuchtstoffplatte erst dann in der Ausleseeinheit ausgelesen werden, nachdem zunächst die vorhergehende und bereits ausgelesene Kassette vollständig aus dem in der Ausgabeeinheit befindlichen Eingangsbereich der Ausleseeinheit entfernt und dann die nachfolgende Kassette von der Eingabeeinheit zur Ausgabeeinheit befördert worden ist. Dies kann zu unerwünschten Verzögerungen beim Verarbeiten einzelner Kassetten oder auch größerer Kassettenstapel führen.

Aus der US 2006/0131526 A1 ist eine weitere Vorrichtung zum Auslesen von in Speicherleuchtstoffplatten gespeicherten Röntgeninformationen bekannt. Bei dieser Vorrichtung ist die Ausleseeinheit zwischen der Eingabeeinheit und der Ausgabeeinheit angeordnet. Die Kassetten werden von der Eingabeeinheit horizontal in Richtung Ausleseeinheit verschoben. Dort wird die in der jeweiligen Kassette befindliche Speicherleuchtstoffplatte nach unten in das Innere der Vorrichtung befördert, ausgelesen und wieder in die Kassette zurückbefördert, welche schließlich von der Ausleseeinheit horizontal in Richtung Ausgabeeinheit verschoben wird.

Auch bei dieser Vorrichtung kann es wegen des dreistufigen und dadurch relativ langen Verschiebeweges von der Eingabeeinheit zur Ausleseeinheit und von dieser zur Ausgabeeinheit zu unterwünschten Verzögerungen beim Verarbeiten sowohl einzelner Kassetten als auch größerer Kassettenstapel kommen.

Aus US 2006/0131527 A1 ist eine Vorrichtung bekannt, bei welcher Kassetten in einen Eingabebehälter eingegeben, von dort zunächst in einen Vorauslesebereich, anschließend in einen Lesebereich, dann in einen Nachauslesebereich und schließlich in einen Ausgabebehälter transportiert werden. Der Eingabe- und Ausgabebehälter sind räumlich voneinander getrennt, und der Lesebereich, in welchem eine Speicherleuchtstoffplatte aus der im Lesebereich befindlichen Kassette entnommen und einem Lese- und Löschmodul zugeführt werden kann, liegt in einem hinter dem Eingabe- und Ausgabebehälter befindlichen Zwischenraum.

Es ist Aufgabe der vorliegenden Erfindung, eine Vorrichtung zum Auslesen von in Speicherleuchtstoffplatten gespeicherten Röntgeninformationen anzugeben, welche eine möglichst zeitsparende und zuverlässige Verarbeitung von Kassetten erlaubt.

Diese Aufgabe wird gemäß der technischen Lehre des Anspruchs 1 gelöst.

Die erfindungsgemäße Vorrichtung zum Auslesen von in Speicherleuchtstoffplatten gespeicherten Röntgeninformationen weist auf: eine Eingabeeinheit, in welcher mehrere Kassetten, in denen sich jeweils eine auszulesende Speicherleuchtstoffplatte befindet, eingegeben werden können, eine Ausleseeinheit, welche sich unterhalb der Eingabeeinheit befindet und in welcher Speicherleuchtstoffplatten ausgelesen werden können, wobei eine Speicherleuchtstoffplatte aus einer in der Eingabeeinheit befindlichen Kassette entnommen und der unterhalb der Eingabeeinheit befindlichen Ausleseeinheit zum Auslesen der Speicherleuchtstoffplatte zugeführt und nach dem Auslesen der Speicherleuchtstoffplatte wieder in die in der Eingabeeinheit befindliche Kassette zurückgeführt werden kann, eine Ausgabeeinheit, welche an die Eingabeeinheit angrenzt und in welcher Kassetten ausgegeben werden können, und eine Verschiebeeinrichtung zum Verschieben der in der Eingabeeinheit befindlichen Kassette, deren Speicherleuchtstoffplatte in der unterhalb der Eingabeeinheit befindlichen Ausleseeinheit ausgelesen worden ist, entlang eines im Wesentlichen horizontalen Verschiebeweges zu der an die Eingabeeinheit angrenzenden Ausgabeeinheit.

Bei der erfindungsgemäßen Vorrichtung kann die in einer nachfolgenden Kassette befindliche Speicherleuchtstoffplatte bereits in der unterhalb der Eingabeeinheit befindlichen Ausleseeinheit ausgelesen werden, nachdem die vorhergehende Kassette aus der Eingabeeinheit in die Ausgabeeinheit verschoben worden ist. Die aus der Speicherleuchtstoffplatte ausgelesenen Röntgeninformationen stehen daher schneller bereit als bei den aus dem Stand der Technik bekannten Vorrichtungen. Dadurch wird auch auf einfache Weise eine schnelle und zuverlässige Verarbeitung von Kassettenstapeln gewährleistet.

In einer bevorzugten Ausgestaltung der Erfindung weist die Eingabeeinheit einen länglichen Aufnahmeschacht zum Aufnehmen einer der in der Eingabeeinheit eingegebenen Kassetten auf, wobei der Aufnahmeschacht eine längliche Eingabeöffnung aufweist, durch welche hindurch die Speicherleuchtstoffplatte, die sich in der vom Aufnahmeschacht aufgenommenen Kassette befindet, zur Ausleseeinheit hin und von dort wieder in die Kassette zurück befördert werden kann. Dadurch wird auf einfache Weise eine zuverlässige Ausrichtung der Kassette und der darin befindlichen Speicherleuchtstoffplatte bezüglich der unterhalb der Eingabeeinrichtung angeordneten Ausleseeinrichtung sowie eine sichere und lichtgeschützte Entnahme bzw. Rückführung der Speicherleüchtstoffplatte erreicht.

Vorzugsweise ist am unteren Ende des Aufnahmeschachts eine untere Auflagefläche vorgesehen, auf welcher die vom Aufnahmeschacht aufgenommene Kassette aufliegt. Die Ausgabeeinheit weist hierbei eine Auflagefläche auf, welche in Flucht mit der unteren Auflagefläche des Aufnahmeschachts angeordnet ist, so dass die im Aufnahmeschacht der Eingabeeinheit befindliche Kassette entlang der unteren Auflagefläche des Aufnahmeschachts auf die Auflagefläche der Ausgabeeinheit geschoben werden kann. Insbesondere ist hierbei vorgesehen, dass die Auflagefläche der Ausgabeeinheit an die untere Auflagefläche des Aufnahmeschachts angrenzt. Dadurch kann eine Kassette nach dem Auslesen auf einfache, schnelle und zuverlässige Weise von der Eingabeeinheit in die Ausgabeeinheit befördert werden.

In einer weiteren vorteilhaften Ausgestaltung der Erfindung weist die Ausgabeeinheit eine zweite Neigungsfläche auf, welche an die Auflagefläche der Ausgabeeinheit angrenzt und zur Vorderseite der Ausgabeeinheit hin, von welcher aus eine Bedienperson Kassetten entnehmen kann, abfällt. Eine auf der schmalen Auflagefläche der Ausgabeeinheit befindliche Kassette braucht dann nur ein kleines Stück in Richtung zur zweiten Neigungsfläche verschoben werden, um schließlich ohne weitere Maßnahmen die Auflagefläche für weitere Kassetten ganz freizugeben und auf der zweiten Neigungsfläche in Richtung der Vorderseite der Ausgabeeinheit zu rutschen, wo sie von der Bedienperson bequem entnommen werden kann.

Es ist außerdem bevorzugt, dass die Eingabeeinheit eine erste Neigungsfläche aufweist, welche an das obere Ende des Aufnahmeschachtes angrenzt und zur Vorderseite der Eingabeeinheit hin, von welcher aus eine Bedienperson Kassetten in die Eingabeeinheit eingeben kann, ansteigt. Hierdurch wird auf besonders einfache Weise eine automatische Zuführung einzelner Kassetten eines Kassettenstapels zur Ausleseeinheit erreicht.

In einer weiteren Ausgestaltung der Erfindung weist die Verschiebeeinrichtung ein horizontal verfahrbares Transportband auf, an dem zwei Mitnehmer zum Mitnehmen, d. h. Verschieben, der von dem Aufnahmeschacht aufgenommenen Kassette angebracht sind, die entlang der Länge des Transportbandes voneinander beabstandet sind. Der Abstand ist dabei größer als die größte Breite der horizontalen Breiten der Kassetten, die in der Vorrichtung verarbeitet werden sollen. Durch die Mitnehmer, die als Nocken realisiert sein können, kann auf besonders einfache, kostengünstige und zuverlässige Weise das Verschieben der in dem Aufnahmeschacht befindlichen Kassette bewirkt werden. Durch die beiden voneinander beabstandeten Mitnehmer kann die Kassette schnell und sicher in zwei einander entgegengesetzte Richtungen verschoben werden. Dabei befindet sich die Kassette zwischen den beiden Mitnehmern, so dass beim Verschieben in die eine Richtung der eine der Mitnehmer und beim Verschieben in die andere, entgegengesetzte Richtung der andere der Mitnehmer mit der Kassette in Kontakt kommt. Die beiden Mitnehmer sind an dem, vorzugsweise als Endlosband ausgebildeten, Transportband insbesondere um 180° phasenverschoben angeordnet.

In einer vorteilhaften Weiterbildung dieser Ausgestaltung weisen die zwei Mitnehmer jeweils zwei einzelne Teilmitnehmer auf, die entlang der Länge des Transportbandes unmittelbar angrenzend aneinander an .dem Transportband angebracht sind. Die zwei Mitnehmer sind somit jeweils als Doppelmitnehmer ausgestaltet. Die einzelnen Teilmitnehmer können insbesondere als Nocken oder Klötze realisiert sein. Beim Verschieben der in dem Aufnahmeschacht befindlichen Kassette wird somit der an der Kassette anliegend Teilmitnehmer von dem unmittelbar angrenzenden weiteren Teilmitnehmer gestützt. Dies gewährleistet ein besonders sicheres Transportieren der Kassette. Ferner kann durch diese Ausgestaltung ein geringes Verformen des Transportbandes beim horizontalen Verfahren der Kassetten sichergestellt werden.

Vorteilhafterweise wird das als Endlosband ausgebildete Transportband über Umlenkrollen umgelenkt. Dies gewährleistet eine kompakte Anordnung der Verschiebeeinrichtung. Durch die Realisierung der Mitnehmer mittels der einzelnen Teilmitnehmer kann bei einem Umlaufen der geteilten Mitnehmer um die Umlenkrollen in dem Transportband eine besonders geringe Spannung gewährleistet werden. Dies gewährleistet eine lange Haltbarkeit sowie einen weitgehend ruckfreien Gleichlauf des Transportbands.

Vorzugsweise sind in der Ausgabeeinheit zwei horizontal voneinander beabstandete Abdrücker vorhanden, die in der Weise verfahrbar sind, dass eine im Bereich der Rückwand der Ausgabeeinheit befindliche oder auf der Auflagefläche der Ausgabeeinheit liegende Kassette von den Abdrückern von der Rückwand bzw. der Auflagefläche weg geschoben werden kann. Dadurch wird ein sicheres und stabiles Verschieben der an der Rückwand lehnenden bzw. auf der Auflagefläche liegenden Kassette gewährleistet, so dass eine neue Kassette von der Eingabeeinheit in die Ausgabeeinheit nachgeschoben und stets an hinterster Position an den in der Ausgabeeinheit befindlichen Kassettenstapel angefügt werden kann.

Es ist außerdem bevorzugt, dass die Kassette von den Abdrückern auf die zweite Neigungsfläche der Ausgabeeinheit geschoben werden kann, so dass die Kassette dann auf der zweiten Neigungsfläche zur Vorderseite der Ausgabeeinheit rutschen kann.

Bei dieser Ausgestaltung der Erfindung ist vorzugsweise eine Steuerung zum Steuern der Abdrücker vorhanden. Diese ist so ausgestaltet, dass sie ein sequentielles Verfahren der beiden Abdrücker steuert. Bei diesem sequentiellen Verfahren verfährt sie bei einem Verschieben der in dem Aufnahmeschacht befindlichen Kassette in die Ausgabeeinheit zunächst den zur Eingabeeinheit näher platzierten und bereits in Stapelrichtung verfahrenen Abdrücker in die entgegengesetzte Stapelrichtung. Anschießend verfährt sie den von der Eingabeeinheit weiter entfernten und ebenfalls bereits in Stapelrichtung verfahrenen Abdrücker ebenfalls in die entgegengesetzte Stapelrichtung. Durch das sequentielle Verfahren der beiden Abdrücker in die entgegengesetzte Stapelrichtung werden die Abdrücker nacheinander aus dem Verschiebeweg der in dem Aufnahmeschacht befindlichen Kassette gefahren. Die beiden Abdrücker weichen somit der in die Ausgabeeinheit verschobenen Kassette.

In einer besonders bevorzugten Ausgestaltung der erfindungsgemäßen Vorrichtung sind die Eingabeeinheit und Ausleseeinheit in einem ersten Gehäuseteil untergebracht, welcher auf dem Boden stehen kann. Die Ausgabeeinheit ist in einem zweiten Gehäuseteil untergebracht, welcher am ersten Gehäuseteil freitragend angeordnet ist und damit nicht auf dem Boden steht. Dadurch kann die für die Vorrichtung benötigte Standfläche auf etwa die Hälfte reduziert werden, was insbesondere beim Einsatz der Vorrichtung in kleinen Räumen, wie z.B. Röntgenräumen, von großem Vorteil ist. Darüber hinaus ist diese Ausgestaltung sehr materialsparend.

Der zweite Gehäuseteil hat insbesondere die Form eines in einem Seitenbereich des ersten Gehäuseteils angeordneten Auslegers oder Vorsprungs. Vorzugsweise weist der Ausleger bezüglich des ersten Gehäuseteils ein distales Ende sowie ein proximales Ende auf, wobei die Höhe und/oder Tiefe des distalen Endes kleiner ist als die Höhe bzw. Tiefe des proximalen Endes. Auf diese Weise wird einerseits eine mechanisch belastbare und stabile und andererseits eine platz- und materialsparende Anordnung des zweiten Gehäuseteils am ersten Gehäuseteil erreicht.

In einer weiteren bevorzugten Ausgestaltung der Erfindung grenzt die untere Auflagefläche des Aufnahmeschachts an eine dritte Neigungsfläche, an welcher die vom Aufnahmeschacht aufgenommene Kassette mit ihrer breiten Seite anliegen kann. Die Ausgabeeinheit weist eine vierte Neigungsfläche auf, an welcher eine entlang der unteren Auflagefläche des Aufnahmeschachts auf die Auflagefläche der Ausgabeeinheit verschobene Kassette anliegen kann, wobei die dritte Neigungsfläche in Flucht mit der vierten Neigungsfläche angeordnet ist. Hierdurch wird ein einfacher und zuverlässiger Transport der für die Entnahme und Rückführung der Speicherleuchtstoffplatte in der Eingabeeinheit bereitgestellten Kassette von der Eingabeeinheit zur Ausgabeeinheit sichergestellt.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Ausführungsbeispiels einer erfindungsgemäßen Vorrichtung zum Auslesen von in Speicherleuchtstoffplatten gespeicherten Röntgeninformationen,
- Fig. 2: eine schematische Schnittdarstellung einer Seitenansicht der Vorrichtung mit einer Eingabeeinheit und einem Aufnahmeschacht,
- Fig. 3: eine schematische Schnittdarstellung einer weiteren Seitenansicht der Vorrichtung mit einer Ausgabeeinheit,
- Fig. 4A-C: schematische Darstellungen von Draufsichten auf den Aufnahmeschacht und eine Verschiebeeinrichtung der Vorrichtung, wobei an einem Übergang des Aufnahmeschachts zu der Eingabeeinheit zwei voneinander beabstandete Ablenkelemente angeordnet sind,
- Fig. 5A-C: weitere schematische Darstellungen von Draufsichten auf den Aufnahmeschacht und die Verschiebeeinrichtung der Vorrichtung mit einer Veranschaulichung der Funktionsweise des linken Ablenkelements,
- Fig. 6A-C: weitere schematische Darstellungen von Draufsichten auf den Aufnahmeschacht und die Verschiebeeinrichtung der Vorrichtung mit einer Veranschaulichung der Funktionsweise des rechten Ablenkelements,
- Fig. 7A-D: schematische Darstellungen von Draufsichten auf den Aufnahmeschacht und die Verschiebeeinrichtung der Vorrichtung mit einer Veranschaulichung der Funktionsweise eines weiteren, rechten Ablenkelements, das in eine Sperr- und eine Passierposition verschwenkbar ist,
- Fig. 8A, B: schematische Darstellungen von Frontansichten auf eine Rückwand der Vorrichtung,
- Fig. 9A-D: schematische Darstellungen von Draufsichten auf den Aufnahmeschacht, die Verschiebeeinrichtung und eine Ausgabeeinheit der Vorrichtung mit einer Veranschaulichung der Funktionsweise von in der Rückwand der Ausgabeeinheit angeordneten Abdrückern,
- Fig. 10A-C: schematische Darstellungen einer ersten Seitenansicht, einer Draufsicht und einer zweiten Seitenansicht eines Transportbandes der Verschiebeeinrichtung mit einer Doppelnocke als Mitnehmer, die zwei einzelne Nocken als Teilmitnehmer aufweist, und
- Fig. 11: eine schematische Darstellung einer weiteren Frontansicht auf die Rückwand der Vorrichtung mit einer in der Rückwand angeordneten Erfassungseinrichtung.

Im Folgenden werden, sofern nicht anders angegeben, für gleiche oder gleichwirkende Elemente gleiche Bezugszeichen verwendet.

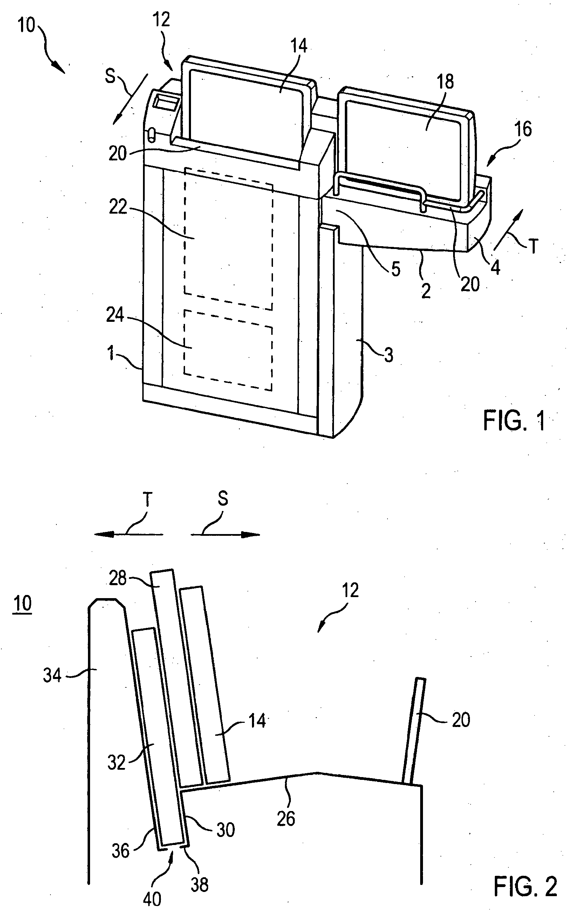

Fig. 1 zeigt eine schematische Darstellung eines Ausführungsbeispiels einer erfindungsgemäßen Vorrichtung 10 zum Auslesen von in Speicherleuchtstoffplatten gespeicherten Röntgeninformationen.

Die Vorrichtung 10 enthält eine Eingabeeinheit 12 zum Eingeben von mehreren Kassetten, in denen sich jeweils eine auszulesende Speicherleuchtstoffplatte befindet. Die Kassetten weisen jeweils an einer ihrer schmalen Stirnseiten einen Verschluss auf, der in der Vorrichtung 10 geöffnet und geschlossen werden kann. Die Kassetten werden von einer Bedienperson jeweils hochkant und mit dem Verschluss nach unten in die Eingabeeinheit 12 hinein gestellt dort hintereinander in einer Stapelrichtung S gestapelt.

In Fig. 1 ist eine, in Stapelrichtung S betrachtet, vordere Kassette 14 in der Eingabeeinheit 12 zu sehen. Direkt neben der Eingabeeinheit 12 ist eine Ausgabeeinheit 16 zum Ausgeben von Kassetten angeordnet. In der Ausgabeeinheit 16 werden diejenigen Kassetten hintereinander gestapelt, deren Speicherleuchtstoffplatten bereits ausgelesen wurden. Die Kassetten werden in der Ausgabeeinheit 16 in einer entgegengesetzten Stapelrichtung T gestapelt, die der Stapelrichtung S entgegengesetzt gerichtet ist.

In der Fig. 1 ist eine, in die entgegengesetzte Stapelrichtung T betrachtet, hintere Kassette 18 dargestellt. Die in der Ausgabeeinheit 16 gestapelten Kassetten können von der Bedienperson entnommen und für eine erneute Röntgenaufnahme eingesetzt werden. Sowohl die Eingabeeinheit 12 als auch die Ausgabeeinheit 16 sind zur Bedienseite der Vorrichtung 10 hin jeweils mit einer Leiste 20 als Umrandung versehen. Dadurch kann vorteilhafterweise ein Herausfallen einer in der Eingabeeinheit 12 oder der Ausgabeeinheit 16 befindlichen Kassette verhindert werden.

Unterhalb der Eingabeeinheit 12 befindet sich im Innern der Vorrichtung 10 eine - nur schematisch angedeutete - Ausleseeinheit 22, in der die aus einer der Kassetten heraus und in die Ausleseeinheit 22 hinein transportierte Speicherleuchtstoffplatte in an sich bekannter Weise ausgelesen und ein nach dem Auslesen in der Speicherleuchtstoffplatte verbliebenes Restbild gelöscht wird. Nach dem Auslesen der Speicherleuchtstoffplatte wird diese wieder in die zugehörige Kassette zurück transportiert. Die Kassette selbst verbleibt während des Auslesevorgangs außerhalb der Vorrichtung 10. Die in die Vorrichtung 10 eingegebenen Kassetten können vorteilhafterweise einen RF (Radio Frequency)-Chip aufweisen, der vor dem Auslesen der Speicherleuchtstoffplatte von einer geeigneten Leseeinrichtung ausgelesen wird. In dem RF-Chip können verschiedene Angaben zu der Kassette, insbesondere ihr Format, oder zu der in der Speicherleuchtstoffplatte vorhandenen Röntgenaufnahme abgespeichert sein.

Die Vorrichtung 10 enthält zum Steuern aller erforderlichen Abläufe und Vorgänge eine - ebenfalls nur schematisch angedeutete - Steuereinrichtung 24, die mit verschiedenen, von ihr zu steuernden Komponenten der Vorrichtung 10 verbunden ist.

Die Eingabeeinheit 12 und die Ausleseeinheit 22 sind gemeinsam in einem ersten Gehäuseteil 1 untergebracht, welcher auf dem Boden steht. Die Ausgabeeinheit 16 ist in einem zweiten Gehäuseteil 2 untergebracht, welcher im Seitenbereich 3 des ersten Gehäuseteils 1 an diesem freitragend angeordnet ist und die Form eines Auslegers oder Seitenarms aufweist. Die Vorrichtung 10 benötigt dadurch nur eine Standfläche für den ersten Gehäuseteil 1, wohingegen für den zweiten Gehäuseteil 2 keine zusätzliche Standfläche erforderlich ist.

Der als Ausleger ausgebildete zweite Gehäuseteil 2 weist bezüglich des ersten Gehäuseteils 1 ein distales Ende 4 sowie ein proximales Ende 5 auf, wobei die in vertikaler Richtung verlaufende Höhe und/oder die senkrecht dazu verlaufende Tiefe des distalen Endes 4 kleiner ist als die Höhe bzw. Tiefe des proximalen Endes 5.

Fig. 2 zeigt eine schematische Schnittdarstellung einer Seitenansicht der Eingabeeinheit 12. Die Eingabeeinheit 12 weist eine Neigungsfläche 26 auf, die hier in Stapelrichtung S gegenüber der Horizontalen geneigt ausgestaltet ist. Dadurch können die in die Eingabeeinheit 12 hinein gestellten Kassetten aufgrund ihrer Schwerkraft in die entgegengesetzte Stapelrichtung T rutschen. Die Neigung der Neigungsfläche 26 gegenüber der Horizontalen beträgt vorzugsweise 5° bis 10°.

In der Eingabeeinheit 12 befinden sich im hier dargestellten Beispiel zwei Kassetten 14 und 28.

Die Vorrichtung 10 weist einen in die entgegengesetzte Stapelrichtung T an die Neigungsfläche 26 der Eingabeeinheit 12 angrenzenden, länglichen Aufnahmeschacht 30 zum Aufnehmen einer der mehreren Kassetten auf, der gegenüber der Neigungsfläche 26 um vorzugsweise 10 bis 50 mm abgesenkt ist. Die auf der Neigungsfläche 26 in hinterster Position befindliche Kassette rutscht aufgrund der Schwerkraft weitgehend selbstständig in den Aufnahmeschacht 30, sofern dieser nicht bereits von einer Kassette belegt ist.

Im Ausführungsbeispiel nach Fig. 2 ist eine von dem Aufnahmeschacht 30 aufgenommene Kassette 32 dargestellt. In der entgegengesetzten Stapelrichtung T schließt sich an den Aufnahmeschacht 30 eine Rückwand 34 der Vorrichtung 10 an. Die Rückwand 34 verläuft vorzugsweise durchgehend von der Eingabeeinheit 12 zur Ausgabeeinheit 16 und weist eine Neigungsfläche 36 auf, die gegenüber der Vertikalen geneigt ist. Dadurch können die im Aufnahmeschacht 30 und in der Eingabeeinheit 12 befindlichen Kassetten 32, 28 und 14 jeweils mit einer ihrer breiten Seiten stabil an der Rückwand 34 anliegen. Die Neigungen der Neigungsflächen 26, 36 sind vorzugsweise aufeinander abgestimmt, so dass die beiden Neigungsflächen 26, 36 in einem rechten Winkel zueinander stehen.

In einer unteren Auflagefläche 38 des Aufnahmeschachts 30 ist eine Eingabeöffnung 40 vorgesehen, durch die hindurch die Speicherleuchtstoffplatte, die in der in dem Aufnahmeschacht 30 befindlichen Kassette vorhanden ist, in das Innere der Vorrichtung 10 transportiert werden kann. Die Eingabeöffnung 40 ist länglich und schlitzförmig ausgebildet, wobei ihre Länge mindestens so groß ist wie die entsprechende Länge des größten in der Vorrichtung 10 auszulesenden Speicherleuchtstoffplattenformats. Die Breite der Eingabeöffnung 40 ist ausreichend groß gewählt, damit die Speicherleuchtstoffplatten bei ihren Entnahmen aus den Kassetten auch bei kleineren Lageschwankungen nicht durch die Eingabeöffnung 40 behindert werden. In der Endposition der in dem Aufnahmeschacht 30 befindlichen Kassette 32 befindet sich deren Verschluss unmittelbar über der Eingabeöffnung 40.

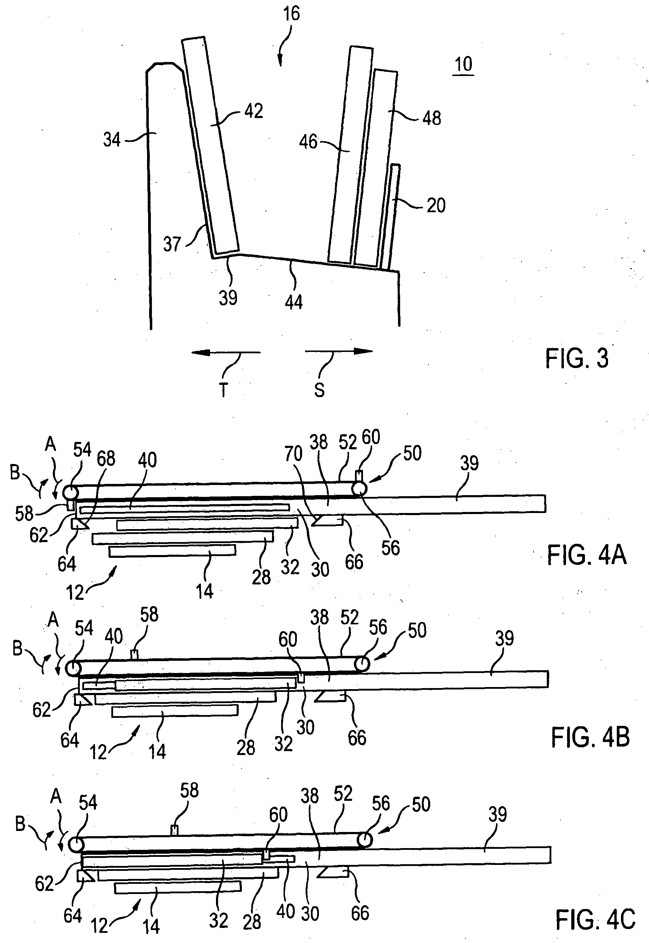

Fig. 3 zeigt eine schematische Schnittdarstellung einer weiteren Seitenansicht der Vorrichtung 10. Hier ist die Seitenansicht der Ausgabeeinheit 16 mit der Rückwand 34 zu sehen. Die Rückwand 36 weist eine Neigungsfläche 37 auf, an welcher eine Kassette 42, in der sich eine bereits ausgelesene Speicherleuchtstoffplatte befindet, flächig anliegt. Die Kassette 42 wurde im Aufnahmeschacht 30 entlang der unteren Auflagefläche 38 des Aufnahmeschachts 30 (siehe Fig. 2) sowie entlang einer in der Ausgabeeinheit 16 befindlichen Auflagefläche 39, welche mit der unteren Auflagefläche 38 des Aufnahmeschachts 30 fluchtet und insbesondere an diese angrenzt, von der Eingabeeinheit 12 in die Ausgabeeinheit 16 geschoben. Die Neigungsfläche 37 der Rückwand 34 im Bereich der Ausgabeeinheit 16 ist vorzugsweise in Flucht mit der Neigungsfläche 36 der Rückwand 34 im Bereich der Eingabeeinheit 12 angeordnet.

Die Auflagefläche 39 der Ausgabeeinheit 16 hat im Wesentlichen dieselbe Breite wie die untere Auflagefläche 38 des Aufnahmeschachts 30 der Eingabeeinheit 12, liegt jedoch nicht in einem Schacht, sondern grenzt unmittelbar an eine Neigungsfläche 44, die in Stapelrichtung S gegenüber der Horizontalen geneigt ist und von einer Vorderkante der Auflagefläche 39 zur Vorderseite der Ausgabeeinheit 16 hin, von welcher aus ein Bediener Kassetten 46, 48 entnehmen kann, abfällt. Durch die Schräge der Neigungsfläche 44 können in die Ausgabeeinheit 16 ausgegebene Kassetten aufgrund ihrer Schwerkraft über die Neigungsfläche 44 zu der im Bereich der Vorderseite der Ausgabeeinheit 16 befindlichen Leiste 20 rutschen. Dort bildet sich dann ein Stapel von Kassetten mit bereits ausgelesenen Speicherleuchtstoffplatten. In der Fig. 3 sind diesbezüglich Kassetten 46 und 48 dargestellt.

Fig. 4A-C zeigen schematische Darstellungen von Draufsichten auf den Aufnahmeschacht 30 und eine Verschiebeeinrichtung 50 der Vorrichtung 10, wobei der Ablauf des Aufnehmens der Kassette 32 von dem Aufnahmeschacht 30 und das Positionieren der von dem Aufnahmeschacht 30 aufgenommenen Kassette 32 mittels der Verschiebeeinrichtung 50 gezeigt wird.

Die Verschiebeeinrichtung 50 dient zum horizontalen Verschieben der in dem Aufnahmeschacht 30 befindlichen Kassette 32 entlang eines Verschiebeweges. Die Verschiebeeinrichtung 50 ist in der Rückwand 34 angeordnet und weist ein als Endlosband ausgebildetes Transportband 52 auf. Das Transportband 52 wird durch zwei horizontal voneinander beabstandete Umlenkrollen 54 und 56 geführt. Zumindest eine der Umlenkrollen 54, 56 ist mit einem Antrieb verbunden, durch den sie in zwei entgegengesetzte Transportrichtungen A und B gedreht werden kann. Der Antrieb ist mit der Steuereinrichtung 24 verbunden. Durch die Anordnung der Umlenkrollen 54, 56 befindet sich das Transportband 52 in einem gespannten Zustand.

An dem Transportband 52 sind zwei Mitnehmer zum Mitnehmen der in dem Aufnahmeschacht befindlichen Kassette 32 angeordnet. Die Mitnehmer sind hier Nocken 58 und 60, die ausgehend von dem Transportband 52 senkrecht nach außen ragen. Die beiden Nocken 58, 60 sind entlang der Länge des Transportbandes 52 voneinander beabstandet. Dabei ist der Abstand zwischen den beiden Nocken 58, 60 größer als die größte Breite der horizontalen Breiten der in der Vorrichtung 10 auszulesenden Kassetten.

Im vorliegenden Ausführungsbeispiel ist der Abstand zwischen den beiden Nocken 58, 60 im Wesentlichen so groß wie der Abstand zwischen den beiden Umlenkrollen 54, 56. Dadurch ist eine der Nocken 58, 60 zum Aufnahmeschacht 30 hingewandt und die andere der Nocken 58, 60 vom Aufnahmeschacht 30 abgewandt. Die Nocken 58, 60 sind vorzugsweise im Wesentlichen um 180° phasenverschoben. Die Nocke 58 wird insbesondere dazu eingesetzt, die in dem Aufnahmeschacht 30 befindliche Kassette in die Transportrichtung A zu verschieben. Die Nocke 60 dagegen wird insbesondere dazu eingesetzt, die in dem Aufnahmeschacht 30 befindliche Kassette in die Transportrichtung B zu verschieben. Das Verschieben der Kassette erfolgt durch ein Zustandekommen einer Wirkverbindung zwischen der jeweiligen Nocke 58, 60 und einer der vertikal verlaufenden Schmalseiten der Kassette.

Fig. 4A zeigt die sich in der Eingabeeinheit 12 befindlichen Kassetten 14, 28, 32. Der Aufnahmeschacht 30 ist in der dargestellten Situation frei, so dass die Eingabeöffnung 40 sowie die Auflagefläche 38 gut erkennbar sind. Durch die Schräge der Neigungsfläche 26 rutscht die Kassette 32 in den Aufnahmeschacht 30 und kommt auf der Auflagefläche 38 zu liegen. Dies ist in der Fig. 4B dargestellt, in der sich die Kassette 32 in dem Aufnahmeschacht 30 befindet.

In der Situation nach Fig. 4B ist das Transportband 52, ausgehend von der in Fig. 4A dargestellten Situation, in die Transportrichtung B verfahren worden. Die Nocke 60 steht in Wirkverbindung mit der rechten Schmalseite der Kassette 32. Durch Weitertransportieren des Transportbandes 52 wird die Kassette 32 auf der Auflagefläche 38 horizontal in die Transportrichtung B verschoben, bis sie an einem im Aufnahmeschacht 30 befindlichen Anschlag 62 anstößt. Diese Situation ist in der Fig. 4C dargestellt. Der Anschlag 62 ist in einem Randbereich des Aufnahmeschachts 30 so angeordnet, dass der Verschluss der Kassette 32 beim Anschlagen an den Anschlag 62 genau über der Eingabeöffnung 40 liegt..

Im Boden des Aufnahmeschachts 30 ist ein Klemmmechanismus zum Festklemmen der in dem Aufnahmeschacht 30 positionierten Kassette 32 versenkt (nicht dargestellt). Dieser Klemmmechanismus wird zum Festklemmen der Kassette aus dem Boden herausgefahren. Nach dem Auslesen der in der Kassette enthaltenen Speicherleuchtstoffplatte und deren Hineintransportieren in die positionierte Kassette wird der Klemmmechanismus wieder im Boden versenkt, um die Kassette in die Ausgabeeinheit 16 zu verschieben. Der Klemmmechanismus enthält vorzugsweise einen Fehlererkennungsmechanismus, wenn eine zu klemmende Kassette nicht ordnungsgemäß von dem Aufnahmeschacht 30 aufgenommen wurde. Über den Fehlererkennungsmechanismus könne beispielsweise auch Fremdkörper oder falsch eingegebene Kassetten erkannt werden.

Der Klemmmechanismus ist in der vorliegenden Anmeldung nicht weiter beschrieben. Bezüglich der Offenbarung des Klemmmechanismus' wird auf den diesbezüglichen Offenbarungsgehalt der Europäischen Patentanmeldung EP 1 640 800 A1 verwiesen, der hiermit in den Offenbarungsgehalt der vorliegenden Anmeldung aufgenommen wird. Dies gilt insbesondere auch für die Beschreibung des lichtdichten Verschließens der festgeklemmten Kassette.

In den Fig. 4A-C sind an einem Übergang des Aufnahmeschachts 30 zu der Eingabeeinheit 12 zwei horizontal voneinander beabstandete Ablenkelemente 64 und 66 angeordnet. Das Anlenkelement 64 ist hier in unmittelbarer Nähe des Anschlags 62 im Randbereich des Aufnahmeschachts 30 angeordnet. Vorzugsweise sind der Anschlag 62 und das Ablenkelement integral miteinander verbunden, so dass das Ablenkelement 64 Teil des Anschlags 62 ist. Das Ablenkelement 66 ist an einem Übergang der Eingabeeinheit 12 zu der Ausgabeeinheit 16, d. h. an einem Ausgang der Eingabeeinheit 12, angeordnet.

Die Ablenkelemente 64, 66 dienen zum Ablenken der in der Eingabeeinheit befindlichen nächsten Kassette 28, die der von dem Aufnahmeschacht 30 aufgenommenen Kassette 32 benachbart ist, wenn die nächste Kassette 28 zumindest teilweise in den Verschiebeweg der Kassette 32 ragt. Die Ablenkelemente 64, 66 weisen im dargestellten Beispiel einen abgeschrägten Führungsbereich 68 bzw. 70 zum Führen der nächsten Kassette 28 in Stapelrichtung S auf. Die Oberflächen der Führungsbereiche 68, 70 sind vorteilhafterweise mit einem Material versehen, das beim Ablenken der nächsten Kassette 28 zwischen dieser und den Führungsbereichen 68, 70 einen niedrigen Reibungskoeffizienten gewährleistet.

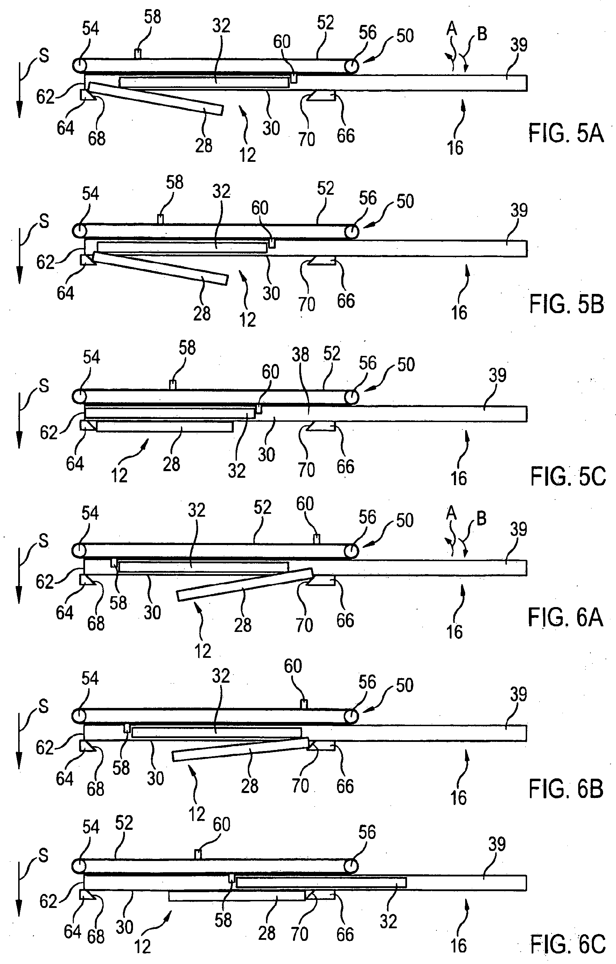

Anhand der Fig. 5A-C soll die Funktionsweise des linken Ablenkelements 64 veranschaulicht werden. Fig. 5A zeigt eine Situation, in der die in der Eingabeeinheit 12 befindliche nächste Kassette 28 teilweise in den Verschiebeweg der in dem Aufnahmeschacht 30 befindlichen Kassette 32 ragt. Das Verschieben der Kassette 32 in Richtung des Anschlags 62 wird somit durch die Kassette 28 behindert. Beim Verschieben der Kassette 32 in Transportrichtung B kommt die Kassette 32 zwangsläufig mit der Kassette 28 in Kontakt. Diese wird zwischen der Kassette 32 und dem Ablenkelement 64 eingeklemmt. Durch das weitere Verschieben der Kassette 32 mittels der Verschiebeeinrichtung 50 wird eine Kraft auf die Kassette 28 in Stapelrichtung S ausgeübt. Dadurch wird die Kassette 28 aufgrund der Führung durch den Führungsbereich 68 des Ablenkelements 64 aus dem Verschiebeweg der Kassette 32 heraus bewegt. Dies ist in der Fig. 5B dargestellt. Die eingeklemmte Schmalseite der nächsten Kassette 28 bewegt sich entlang des Führungsbereichs 68 und die der eingeklemmten Schmalseite gegenüber liegende Schmalseite bewegt sich in die entgegengesetzte Stapelrichtung T. Fig. 5C zeigt eine Situation, in der die Kassette 28 vollständig aus dem Verschiebeweg der Kassette 32 entfernt ist und parallel zu und flächig an der im Aufnahmeschacht bereits am Anschlag 62 positionierten Kassette 32 liegt.

Anhand der Fig. 6A-C soll die Funktionsweise des rechten Ablenkelements 66 veranschaulicht werden. Diese Funktionsweise stimmt weitgehend mit derjenigen des linken Ablenkelements 64 überein, so dass sie hier nicht mehr im Detail erläutert zu werden braucht. Bei dem vorliegenden Ausführungsbeispiel gemäß der Fig. 6A-C wird die in dem Aufnahmeschacht 30 befindliche Kassette 32, deren Speicherleuchtstoffplatte bereits ausgelesen wurde, entlang des Aufnahmeschachts 30 in Richtung Ausgabeeinheit 16 verschoben. Dabei wird ihr Verschiebeweg von der Kassette 28 versperrt. In der Fig. 6C ist zu sehen, wie die Kassette 32 das rechte Ablenkelement 66 passiert und in die Ausgabeeinheit 16 überführt wird.

In den zuvor anhand der Fig. 5A-C und 6A-C beschriebenen Ausführungsbeispielen haben die Ablenkelemente 64, 66 abgeschrägte Führungsbereiche 68 bzw. 70. Es ist ebenso möglich, die Ablenkelemente 64, 66 mit Führungsbereichen zu versehen, die eine andere Form aufweisen. Beispielsweise können Ablenkelemente 64, 66 abgerundete Führungsbereiche aufweisen. Es ist auch möglich, die Ablenkelemente 64, 66 mit unterschiedlich ausgestalteten Führungsbereichen zu versehen.

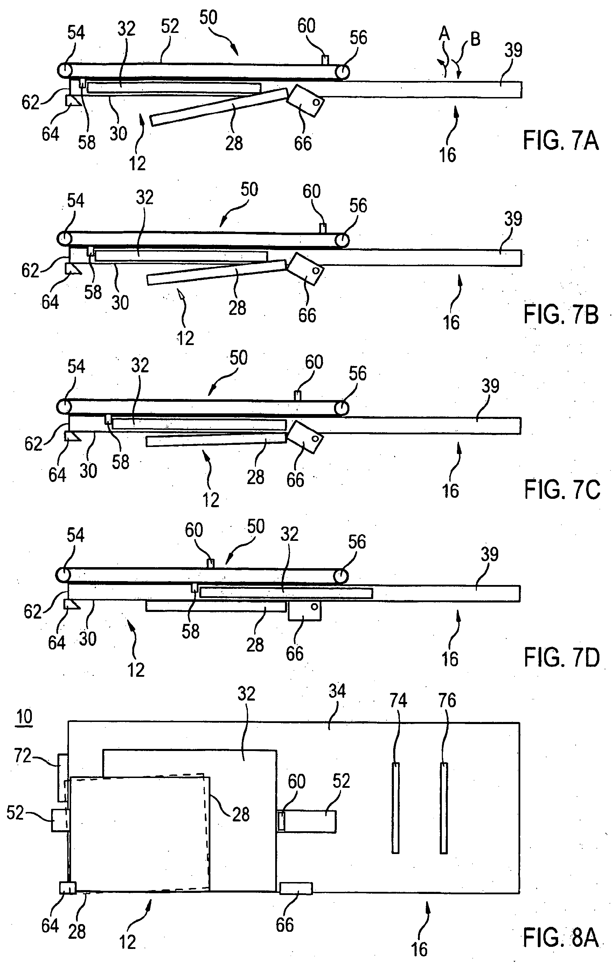

Fig. 7A-D zeigen schematische Darstellungen von Draufsichten auf den Aufnahmeschacht 30 und die Verschiebeeinrichtung 50 der Vorrichtung 10. In dem hier gewählten Ausführungsbeispiel hat das rechte Ablenkelement 66 eine rechteckige Form. Zudem ist es in eine Sperr- und eine Passierposition verschwenkbar. In der Sperrposition versperrt es den Verschiebeweg der im Aufnahmeschacht befindlichen Kassette 32 in die Ausgabeeinheit 16. In den Fig. 7A-C befindet sich das Ablenkelement 66 in dieser Sperrposition. In der Passierposition ist das Ablenkelement 66 aus dem Verschiebeweg der Kassette 32 heraus bewegt worden. Dies ist in Fig. 7D dargestellt. Das Ablenkelement 66 stellt somit eine Art Tor für den Übergang zu der Ausgabeeinheit 16 dar.

Das in die Sperr- und Passierposition verschwenkbare Ablenkelement 66 kann so ausgestaltet sein, dass die in die Transportrichtung A, in Richtung der Ausgabeeinheit 16 verschobene Kassette 32 aufgrund eines mit dem Ablenkelement 66 stattfindenden Kontakts das Ablenkelement in seine Passierposition bringt und damit den Verschiebeweg frei macht. Alternativ kann das Ablenkelement 66 von der Steuereinrichtung 24 so angesteuert werden, dass es mittels eines Antriebs von der Sperr- in die Passierposition gebracht wird. Dies kann vorzugsweise kurz vor dem Eintreffen der Kassette 32 bei Erreichen einer vorgegebenen Verschiebeposition der Kassette 32 erfolgen. Dadurch kann sichergestellt werden, dass vor dem Verschwenken in die Passierposition eine ggf. in den Verschiebeweg ragende Kassette aus diesem heraus befördert worden ist.

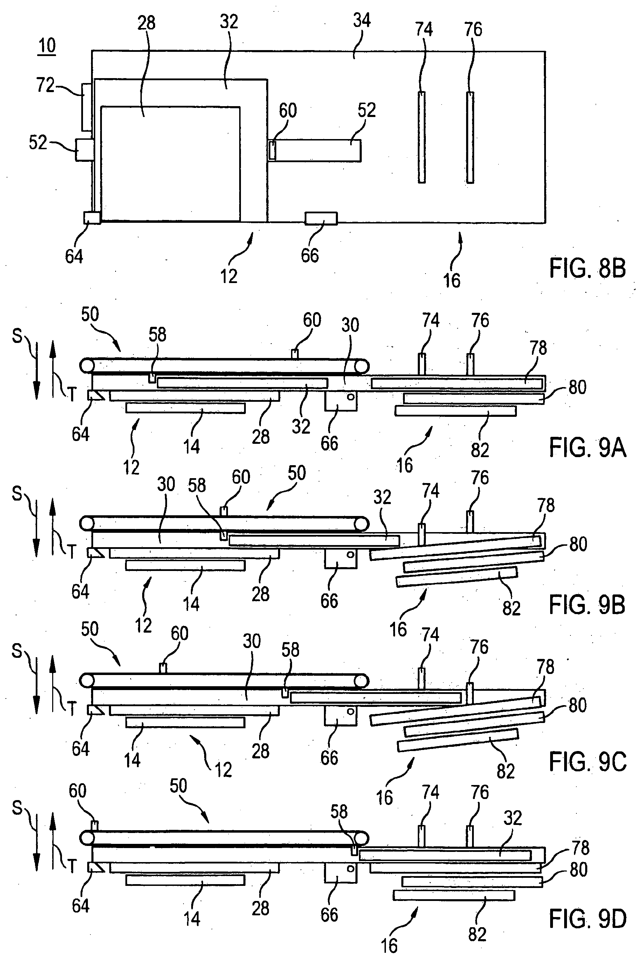

Fig. 8A, B zeigen schematische Darstellungen von Frontansichten der Vorrichtung 10. Die Frontansichten zeigen eine Sicht auf die Rückwand 34. Zu sehen ist in den Fig. 8A, B ein Positionierungselement 72, das oberhalb des Aufnahmeschachts 30 und über dem Ablenkelement 64 angeordnet ist. Das Positionierungselement 72 dient hier einerseits zum exakten horizontalen Positionieren der in dem Aufnahmeschacht 30 befindlichen Kassette 32 und gewährleistet andererseits ein zuverlässiges Herausbewegen der nächsten Kassette 28 aus dem Verschiebeweg, indem ein Verkippen der Kassette 28 über das Positionierungselement 72 hinaus - wie in Fig. 8A mit gestrichelten Linien dargestellt - verhindert wird. Das Resultat ist in Fig. 8B dargestellt, welche die im Aufnahmeschacht befindliche und am Positionierungselement 72 ausgerichtete Kassette 32 sowie die mit hoher Zuverlässigkeit aus dem Verschiebeweg herausbewegte und nunmehr parallel zur Kassette 38 ausgerichtete nächste Kassette 28 zeigt.

Die Fig. 8A, B zeigen ferner zwei horizontal voneinander beabstandete Abdrücker 74 und 76 in der Rückwand 34 der Ausgabeeinheit 16. Die Abdrücker 74, 76 sind in die Stapelrichtung S verfahrbar und können somit eine in Stapelrichtung S vor ihnen befindliche Kassette in die Stapelrichtung S verschieben. Diese gerät dadurch auf die Neigungsfläche 3 44 der Ausgabeeinheit 16 und rutscht in Richtung der Leiste 20 der Ausgabeeinheit 16 (siehe Fig. 3). Die Abdrücker 74, 76 sind mit der Steuereinrichtung 24 verbunden, die deren Betätigung steuert. Die Steuereinrichtung 24 steuert beim Verschieben einer in dem Aufnahmeschacht 30 befindlichen Kassette in die Ausgabeeinheit 16 ein sequentielles Verfahren der Abdrücker 74, 76.

Dies ist in den Fig. 9A-D näher verdeutlicht. Beim sequentiellen Verschieben der Abdrücker 74, 76 wird beim Verschieben der in dem Aufnahmeschacht 30 befindlichen Kassette 32 zunächst der zur Eingabeeinheit 12 näher platzierte Abdrücker 74 in die Stapelrichtung S verfahren. In der Ausgabeeinheit 16 bereits befindliche Kassetten 78, 80, 82 werden in Stapelrichtung S verschoben. Dies ist in Fig. 9B zu sehen. Die Kassette 32 kann dann in die Ausgabeeinheit 16 verschoben werden. Anschließend wird der von der Eingabeeinheit 12 weiter entfernte Abdrücker 76 in die Stapelrichtung S verfahren. Der Abdrücker 74 wird gleichzeitig oder danach in die entgegengesetzte Stapelrichtung T zurück gefahren. Die Kassette 32 kann dann an dem Abdrücker 74 vorbei weiter in die Ausgabeeinheit 16 verschoben werden. Dies ist in der Fig. 9C dargestellt. Zuletzt wird dann auch der Abdrücker 76 in die entgegengesetzte Stapelrichtung T zurück gefahren. Die Kassette 32 kann dann vollständig in die Ausgabeeinheit 16 verschoben werden. Dies ist in der Fig. 9D dargestellt.

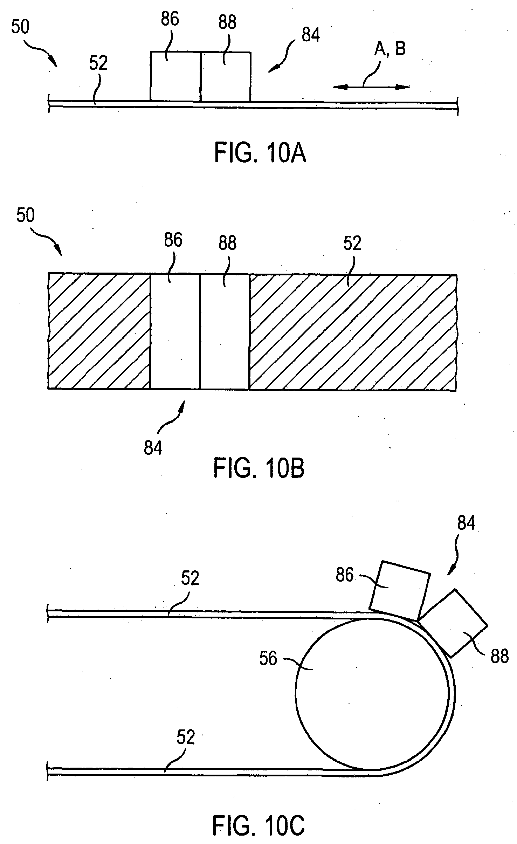

Fig. 10A-C zeigen verschiedene Ansichten des Transportbandes 52 der Verschiebeeinrichtung 50 mit einer sog. Doppelnocke 84 als Mitnehmer, die zwei einzelne Nocken 86, 88 als Teilmitnehmer aufweist. Die beiden Nocken 86, 88 sind voneinander getrennt und entlang der Länge des Transportbandes 52 unmittelbar aneinander grenzend an dem Transportband 52 befestigt.

Fig. 10A zeigt eine erste Seitenansicht, Fig. 10B eine Draufsicht und Fig. 10C eine zweite Seitenansicht des Transportbandes 52 mitsamt den einzelnen Nocken 86, 88. In der Fig. 10C ist zusätzlich die Umlenkrolle 56 und die Situation dargestellt, in der die Doppelnocke 84 um die Umlenkrollen 56 transportiert wird. Die beiden einzelnen Nocken 86, 88 werden durch die Krümmung der Umlenkrolle 56, in Transportrichtung B betrachtet, voneinander getrennt.

Bei der Doppelnocke 84 wird diejenige der einzelnen Nocken 86 oder 88, die an der zu verschiebenden Kassette anliegt, von der jeweils anderen der beiden Nocken 86 bzw. 88 gestützt. Das Transportband 52 wird dadurch beim Verschieben der Kassette nicht so stark verformt. Beim Umlenken der Doppelnocke 84 erfolgt deren Umlauf um die Umlenkrolle 56 nahezu spannungs- und ruckfrei. Vorteilhafterweise sind beide Mitnehmer 58, 60 in Form einer solchen Doppelnocke 84 ausgestaltet.

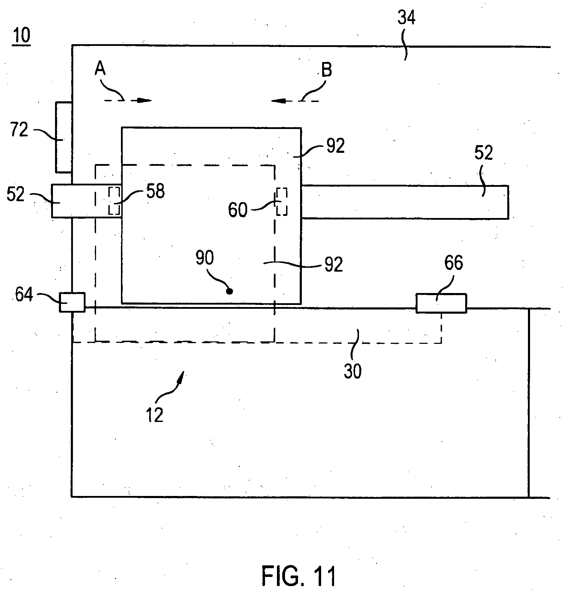

Fig. 11 zeigt eine schematische Darstellung einer weiteren Frontansicht auf die Rückwand 34 der Vorrichtung 10. Dabei ist in der Rückwand 34 eine Erfassungseinrichtung 90 zum Erfassen einer in Stapelrichtung S hintersten, nicht ordnungsgemäß von dem Aufnahmeschacht 30 aufgenommenen Kassette 92 angeordnet. Diese Erfassungseinrichtung 90 kann insbesondere durch eine Lichtschranke oder einen Tastschalter realisiert werden.

Die Erfassungseinrichtung 90 ist mit der Steuereinrichtung 24 verbunden, welche die von der Erfassungseinrichtung ermittelten Informationen verarbeitet, um das ordnungsgemäße Aufnehmen der Kassette 92 festzustellen. Sofern die Erfassungseinrichtung 90 eine nicht ordnungsgemäß in den Aufnahmeschacht 30 aufgenommene Kassette 92 detektiert, steuert die Steuereinrichtung 24 die Verschiebeeinrichtung 50 so an, dass diese die Kassette 92 in die beiden Transportrichtungen A und B hin- und herverschiebt. Die Verschiebeeinrichtung 50 führt dabei ein zumindest kurzzeitiges aufeinanderfolgendes Verfahren des Transportbandes 52 in die zwei entgegengesetzten Transportrichtungen durch. Durch dieses Hin- und Herverschieben wird erreicht, dass die Kassette 92 schließlich in den Aufnahmeschacht 30 rutscht und dort verschoben und korrekt ausgerichtet werden kann.

Fig. 11 zeigt die Kassette 92 in einer Situation, in der sie nicht ordnungsgemäß von dem Aufnahmeschacht 30 aufgenommen wurde. Die Kassette 92 befindet sich oberhalb des Aufnahmeschachts 30. Mittels der Nocke 58 wird die Kassette 92 somit kurzzeitig nach rechts in die Transportrichtung A verschoben. Diese Situation ist in der Fig. 11 mit durchgezogenen Linien dargestellt. Nach dem kurzzeitigen Verschieben der Kassette 92 in die Transportrichtung A steuert die Steuereinrichtung 24 einen Wechsel der Transportrichtung und verfährt das Transportband 52, und damit die Kassette 92, in die Transportrichtung B. Die Nocke 60 verschiebt die Kassette 92 dadurch wieder nach links in die Transportrichtung B. Auf diese Weise wird bewirkt, dass die Kassette 92 in den Aufnahmeschacht 30 fällt oder rutscht. Diese Situation ist in der Fig. 11 mit gestrichelten Linien dargestellt. Die Kassette 92 befindet sich dann in dem Aufnahmeschacht 30 und kann - wie bereits oben näher erläutert - in Richtung des Positionierungselements 72 verschoben und an diesem horizontal ausgerichtet werden.

Zur weiteren Verbesserung des Zuführens der Kassetten in den Aufnahmeschacht 30 kann eine aktiv betriebene Zuführwalze (nicht dargestellt) in der Rückwand 34 oder in der Neigungsfläche 26 (siehe Fig. 2) angeordnet sein, mit der die in Stapelrichtung S hinterste Kassette 92 in den Aufnahmeschacht 30 gezogen werden kann. Es ist auch möglich, die Zuführwalze so auszugestalten, dass ein Stapel von Kassetten, der ggf. auf der Kassette 92 lastet, ein wenig in Stapelrichtung S zurückgeschoben wird, um die Kassette 92 zu entlasten.

## Patentansprüche

1. Vorrichtung (10) zum Auslesen von in Speicherleuchtstoffplatten gespeicherten Röntgeninformationen mit
- einer Eingabeeinheit (12), in welcher mehrere Kassetten (14, 28, 32), in denen sich jeweils eine auszulesende Speicherleuchtstoffplatte befindet, eingegeben werden können, wobei die Eingabeeinheit (12) einen länglichen Aufnahmeschacht (30) zum Aufnehmen einer der in der Eingabeeinheit (12) eingegebenen Kassetten (14, 28, 32) und eine erste Neigungsfläche (26) aufweist, welche an das obere Ende des Aufnahmeschachtes (30) angrenzt und zur Vorderseite der Eingabeeinheit (12) hin, von welcher aus ein Bediener Kassetten (14, 28, 32) eingeben kann, ansteigt, so dass eine auf der Neigungsfläche (26) befindliche Kassette aufgrund der Schwerkraft in den Aufnahmeschacht (30) rutschen und auf einer am unteren Ende des Aufnahmeschachts (30) vorgesehenen und gegenüber der zweiten Neigungsfläche (26) abgesenkten unteren Auflagefläche (38) zu liegen kommen kann,
- einer Ausleseeinheit (22), welche sich unterhalb der Eingabeeinheit (12) befindet und in welcher Speicherleuchtstoffplatten ausgelesen werden können, wobei eine Speicherleuchtstoffplatte aus einer im Aufnahmeschacht (30) der Eingabeeinheit (12) befindlichen Kassette (14, 28, 32) entnommen und der unterhalb der Eingabeeinheit (12) befindlichen Ausleseeinheit (22) zum Auslesen der Speicherleuchtstoffplatte zugeführt und nach dem Auslesen der Speicherleuchtstoffplatte wieder in die im Aufnahmeschacht (30) der Eingabeeinheit (12) befindliche Kassette (14, 28, 32) zurückgeführt werden kann,
- einer Ausgabeeinheit (16), welche an die Eingabeeinheit (12) angrenzt und in welcher Kassetten (14, 28, 32) ausgegeben werden können, wobei die Ausgabeeinheit (16) eine Auflagefläche (39) aufweist, welche in Flucht mit der unteren Auflagefläche (38) des Aufnahmeschachts (30) angeordnet ist, und
- einer Verschiebeeinrichtang (50) zum Verschieben der im Aufnahmeschacht (30) der Eingabeeinheit (12) befindlichen Kassette (32), deren Speicherleuchtstoffplatte in der unterhalb der Eingabeeinheit (12) befindlichen Ausleseeinheit (22) ausgelesen worden ist, entlang eines im Wesentlichen horizontalen Verschiebeweges zu der an die Eingabeeinheit (12) angrenzenden Ausgabeeinheit (16), so dass die auf der unteren Auflagefläche (38) des Aufnahmeschachts (30) aufliegende Kassette (32) entlang der unteren Auflagefläche (38) des Aufnahmeschachts (30) auf die in Flucht mit der unteren Auflagefläche (38) des Aufnahmeschachts (30) angeordneten Auflagefläche (39) der Ausgabeeinheit (16) geschoben wird, wobei die Verschiebeeinrichtung (50) ein horizontal verfahrbares Transportband (52) aufweist, an dem zwei Mitnehmer (58, 60) zum Mitnehmen der von dem Aufnahmeschacht (30) aufgenommenen Kassette (32) angebracht sind, wobei die Mitnehmer (58, 60) entlang der Länge des Transportbandes (52) einen Abstand voneinander aufweisen, welcher größer ist als die größte Breite der horizontalen Breiten der mehreren Kassetten (14, 28, 32).

2. Vorrichtung nach Anspruch 1, wobei der Aufnahmeschacht (30) eine längliche Eingabeöffnung (40) aufweist, durch welche hindurch die Speicherleuchtstoffplatte, die sich in der vom Aufnahmeschacht (30) aufgenommenen Kassette (32) befindet, zur Ausleseeinheit (22) hin und von dort wieder in die Kassette (32) zurück befördert werden kann.

3. Vorrichtung nach Anspruch 1 oder 2, wobei die Auflagefläche (39) der Ausgabeeinheit (16) an die untere Auflagefläche (38) des Aufnahmeschachts (30) angrenzt.

4. Vorrichtung nach einem der vorhergehenden Ansprüche, wobei die Ausgabeeinheit (16) eine zweite Neigungsfläche (44) aufweist, welche an die Auflagefläche (39) angrenzt und zur Vorderseite der Ausgabeeinheit (16) hin, von welcher aus ein Bediener Kassetten (46, 48) entnehmen kann, abfällt.

5. Vorrichtung nach Anspruch 1, wobei wenigstens einer der beiden Mitnehmer (84) jeweils zwei einzelne Teilmitnehmer (86, 88) aufweist, die entlang der Länge des Transportbandes (52) unmittelbar angrenzend aneinander an dem Transportband (52) angebracht sind.

6. Vorrichtung nach einem der vorhergehenden Ansprüche, wobei die Ausgabeeinheit (16) eine Rückwand (34) und zwei horizontal voneinander beabstandete Abdrücker (74, 76) aufweist, welche in der Weise verfahrbar sind, dass eine im Bereich der Rückwand (34) befindliche Kassette (78) von den Abdrückern (74, 76) von der Rückwand (34) weg geschoben werden kann.

7. Vorrichtung nach Anspruch 4 und 6, wobei die Kassette (78) von den Abdrückern (74, 76) auf die zweite Neigungsfläche (44) der Ausgabeeinheit (16) geschoben werden kann und die Kassette (78) auf der zweiten Neigungsfläche zur Vorderseite der Ausgabeeinheit (16) rutschen kann.

8. Vorrichtung nach Anspruch 6 oder 7, wobei eine Steuerung (24) zum Steuern der Abdrücker (74, 76) vorhanden ist und die Steuerung (24) so ausgestaltet ist, dass sie ein sequentielles Verfahren der beiden Abdrücker (74, 76) steuert, bei dem sie bei einem Verschieben der in dem Aufnahmeschacht (30) befindlichen Kassette (32) in die Ausgabeeinheit (16) zunächst den zur Eingabeeinheit (12) näher platzierten und in Stapelrichtung (S) verfahrenen Abdrücker (74) und anschießend den von der Eingabeeinheit (12) weiter entfernten und in Stapelrichtung (S) verfahrenen Abdrücker (76) jeweils in eine entgegengesetzte Stapelrichtung (T) verfährt.

9. Vorrichtung nach einem der vorhergehenden Ansprüche, wobei die Eingabeeinheit (12) und die Ausleseeinheit (22) in einem ersten Gehäuseteil (1) untergebracht sind, welcher auf dem Boden stehen kann, und die Ausgabeeinheit (16) in einem zweiten Gehäuseteil (2) untergebracht ist, welcher am ersten Gehäuseteil (1) freitragend angeordnet ist.

10. Vorrichtung nach Anspruch 9, wobei der zweite Gehäuseteil (2) die Form eines in einem Seitenbereich (3) des ersten Gehäuseteils (1) angeordneten Auslegers aufweist.

11. Vorrichtung nach Anspruch 10, wobei der Ausleger ein bezüglich des ersten Gehäuseteils (1) distales Ende sowie ein proximales Ende aufweist, wobei die Höhe und/oder Tiefe des distalen Endes kleiner ist als die Höhe bzw. Tiefe des proximalen Endes.

12. Vorrichtung nach einem der vorhergehenden Ansprüche, wobei die untere Auflagefläche (38) im Aufnahmeschacht (30) an eine dritte Neigungsfläche (36) grenzt, an welcher die vom Aufnahmeschacht (30) aufgenommene Kassette (32) mit ihrer breiten Seite anliegen kann, und die Ausgabeeinheit (16) eine vierte Neigungsfläche (37) aufweist, an welcher eine entlang der unteren Auflagefläche (38) des Aufnahmeschachts (30) auf die Auflagefläche (39) der Ausgabeeinheit (16) verschobene Kassette (42) anliegen kann, wobei die dritte Neigungsfläche (36) in Flucht mit der vierten Neigungsfläche (37) angeordnet ist.

## Claims

1. Device (10) for reading out X-ray information stored in storage phosphor plates, comprising
- an input unit (12), in which multiple cassettes (14, 28, 32), each accommodating a storage phosphor plate to be read out, can be input, wherein the input unit (12) comprises an oblong take-up slot (30) for taking up one of the cassettes (14, 28, 32) which were input into the input unit (12) and comprises a first inclined plane (26) which is adjacent to the upper end of the take-up slot (30) and which slopes up towards the front side of the input unit (12), from which an operator can input cassettes (14, 28, 32), so that a cassette which is located on the inclined plane (26) can slide into the take-up slot (30) by gravity and can position itself at a lower support surface (38) which is provided at the bottom end of the take-up slot (30) in a lowered position with respect to the second inclined plane (26),
- a read-out unit (22), which is located below the input unit (12) and in which storage phosphor plates can be read out, wherein a storage phosphor plate can be removed from a cassette (14, 28, 32) which is located in the take-up slot (30) of the input unit (12), can be guided to the read-out unit (22) which is located below the input unit (12) in order to read out the storage phosphor plate and, after completion of the reading out of the storage phosphor plate, can be returned into the cassette (14, 28, 32) which is located in the take-up slot (30) of the input unit (12),
- an output unit (16), which is adjacent to the input unit (12) and in which cassettes (14, 28, 32) can be output, wherein the output unit (16) comprises a support surface (39) which is arranged aligned with the lower support surface (38) of the take-up slot (30), and
- a shifting means (50) for shifting the cassette (32) which is located in the take-up slot (30) of the input unit (12) after having read out the storage phosphor plate, which is located in said cassette, in the read-out unit (22) which is located below the input unit (12), along a substantially horizontal shifting path towards the output unit (16) which is adjacent to the input unit (12), so that the cassette (32) which is resting on the lower support surface (38) of the take-up slot (30) is shifted along the lower support surface (38) of the take-up slot (30) onto the support surface (39) of the output unit (16) which is arranged aligned with the lower support surface (38) of the take-up slot (30), wherein the shifting means (50) comprises a horizontally movable conveyor belt (52), at which two drivers (58, 60) are provided for carrying away the cassette (32) taken up by the take-up slot (30), wherein the two drivers (58, 60) are spaced apart, along the length of the conveyor belt (52), by a distance which is greater than the greatest width of the horizontal widths of the multiple cassettes (14, 28, 32).

2. Device according to claim 1, wherein the take-up slot (30) comprises an oblong feed opening (40), through which the storage phosphor plate, which is located in the cassette (32) taken up by the take-up slot (30), can be transported towards the read-out unit (22) and can be returned from that position into the cassette (32).

3. Device according to claim 1 or 2, wherein the support surface (39) of the output unit (16) is adjacent to the lower support surface (38) of the take-up slot (30).

4. Device according to any of the preceding claims, wherein the output unit (16) comprises a second inclined plane (44) which is adjacent to the support plane (39) and which slopes down towards the front side of the output unit (16) from which an operator can take up cassettes (46, 48).

5. Device according to claim 1, wherein at least one of both drivers (84) respectively comprises two single subdrivers (86, 88) which are arranged directly adjacent to one another at the conveyor belt (52) along the length of the conveyor belt (52).

6. Device according to any of the preceding claims, wherein the output unit (16) comprises a rear wall (34) and two pushers (74, 76) which are horizontally spaced apart and which can be moved in such a way that a cassette (78) which is located in the area of the rear wall (34) can be pushed away from the rear wall (34) by means of the pushers (74, 76).

7. Device according to claim 4 and 6, wherein the cassette (78) can be pushed onto the second inclined plane (44) of the output unit (16) by means of the pushers (74, 76) and the cassette (78) can slide on the second inclined plane towards the front side of the output unit (16).

8. Device according to claim 6 or 7, wherein a control unit (24) is provided for controlling the pushers (74, 76) and is configured in such a way that it controls a sequential movement of the two pushers (74, 76), during which, when shifting the cassette (32) located in the take-up slot (30) into the output unit (16), it first moves the pusher (74) which is located more closely to the input unit (12) and which is moved in the stacking direction (S) and subsequently moves in the opposite stacking direction (T) the pusher (76) which is located more distantly from the input unit (12) and which is moved in the stacking direction (S).

9. Device according to any of the preceding claims, wherein the input unit (12) and the read-out unit (22) are provided in a first housing part (1) which can stand on the bottom, and the output unit (16) is provided in a second housing part (2) which is arranged in a self-supporting way at the first housing unit (1).

10. Device according to claim 9, wherein the second housing part (2) has the shape of a cantilever which is arranged in a lateral area (3) of the first housing part (1).

11. Device according to claim 10, wherein the cantilever comprises a distal end and a proximal end with respect to the first housing part (1), wherein the height and/or depth of the distal end is smaller than the height and depth, respectively, of the proximal end.

12. Device according to any of the preceding claims, wherein the lower support surface (38) in the take-up slot (30) is adjacent to a third inclined plane (36) against which the cassette (32) taken up by the take-up slot (30) can rest with its wide side and the output unit (16) comprises a fourth inclined plane (37) against which a cassette (42) can rest which has been shifted onto the support surface (39) of the output unit (16) along the lower support surface (38) of the take-up slot (30), wherein the third inclined plane (36) is arranged aligned with the fourth inclined plane (37).

## Revendications

1. Dispositif (10) de lecture d'informations radiographiques stockées dans des plaques luminescentes à mémoire, comprenant
- une unité d'insertion (12) dans laquelle peuvent être insérées plusieurs cassettes (14, 28, 32) comprenant respectivement une plaque luminescente à mémoire à être lue, ladite unité d'insertion (12) comprenant une fente réceptrice oblongue (30) servant à recevoir une des cassettes (14, 28, 32) insérées dans l'unité d'insertion (12) et comprenant un premier plan incliné (26) adjacent à l'extrémité supérieure de la fente réceptrice (30) et qui s'incline vers le haut vers le côté avant de l'unité d'insertion (12) d'où un opérateur peut insérer des cassettes (14, 28, 32), de façon à ce qu'une cassette située sur le plan incliné (26) puisse glisser dans la fente réceptrice (30) par gravité et puisse se positionner à une surface de support inférieure (38) aménagée à l'extrémité inférieure de la fente réceptrice (30) à une position plus basse par rapport au deuxième plan incliné (26),
- une unité de lecture (22) située sous l'unité d'insertion (12) et dans laquelle peuvent être lues des plaques luminescentes à mémoire, où une plaque luminescente à mémoire peut être reprise d'une cassette (14, 28, 32) située dans la fente réceptrice (30) de l'unité d'insertion (12), peut être guidée vers l'unité de lecture (22) située sous l'unité d'insertion (12) en vue de la lecture de la plaque luminescente à mémoire et, une fois terminée la lecture de la plaque luminescente à mémoire, peut être retournée dans la cassette (14, 28, 32) située dans la fente réceptrice (30) de l'unité d'insertion (12),
- une unité de sortie (16) adjacente à l'unité d'insertion (12) et dans laquelle peuvent être sorties des cassettes (14, 28, 32), où l'unité de sortie (16) comprend une surface de support (39) disposée en alignement avec la surface de support inférieure (38) de la fente réceptrice (30), et
- un moyen de déplacement (50) servant à déplacer la cassette (32) située dans la fente réceptrice (30) de l'unité d'insertion (12) et dont la plaque luminescente à mémoire a été lue dans l'unité de lecture (22) située sous l'unité d'insertion (12), le long d'une trajectoire de déplacement substantiellement horizontale vers l'unité de sortie (16) adjacente à l'unité d'insertion (12), de façon à ce que la cassette (32) reposant sur la surface de support inférieure (38) de la fente réceptrice (30) soit déplacée le long de la surface de support inférieure (38) de la fente réceptrice (30) sur la surface de support (39) de l'unité de sortie (16) disposée en alignement avec la surface de support inférieure (38) de la fente réceptrice (30), où le moyen de déplacement (50) comprend une bande transporteuse horizontalement déplaçable (52) à laquelle sont prévus deux entraîneurs (58, 60) servant à entraîner la cassette (32) reprise par la fente réceptrice (30), lesdits deux entraîneurs (58, 60) étant espacés l'un de l'autre le long de la longueur de la bande transporteuse (52) d'une distance supérieure à la plus grande largeur des largeurs horizontales des plusieurs cassettes (14, 28, 32).

2. Dispositif selon la revendication 1, **caractérisé en ce que** la fente réceptrice (30) comprend une ouverture d'insertion oblongue (40) à travers laquelle la plaque luminescente à mémoire située dans la cassette (32) reprise par la fente réceptrice (30) peut être transportée vers l'unité de lecture (22) et peut être retournée dans la cassette (32) à partir de cette position.

3. Dispositif selon la revendication 1 ou 2, **caractérisé en ce que** la surface de support (39) de l'unité de sortie (16) est adjacente à la surface de support inférieure (38) de la fente réceptrice (30).

4. Dispositif selon l'une quelconque des revendications précédentes, **caractérisé en ce que** l'unité de sortie (16) comprend un deuxième plan incliné (44) adjacent au plan de support (39) et qui s'incline vers le bas vers le côté avant de l'unité de sortie (16) d'où un opérateur peut reprendre des cassettes (46, 48).

5. Dispositif selon la revendication 1, **caractérisé en ce qu'**au moins un des deux entraîneurs (84) comprend respectivement deux sous-entraîneurs séparés (86, 88) disposés directement adjacents l'un à l'autre à la bande transporteuse (52) le long de la longueur de la bande transporteuse (52).

6. Dispositif selon l'une quelconque des revendications précédentes, **caractérisé en ce que** l'unité de sortie (16) comprend une paroi arrière (34) et deux poussoirs (74, 76) espacés horizontalement entre eux et pouvant être déplacés de façon à ce qu'une cassette (78) située dans la zone de la paroi arrière (34) puisse être éloignée de la paroi arrière (34) par les poussoirs (74, 76).

7. Dispositif selon la revendication 4 et 6, **caractérisé en ce que** la cassette (78) peut être déplacée sur le deuxième plan incliné (44) de l'unité de sortie (16) par les poussoirs (74, 76) et que la cassette (78) peut glisser sur le deuxième plan incliné vers le côté avant de l'unité de sortie (16).

8. Dispositif selon la revendication 6 ou 7, **caractérisé en ce qu'**il est prévu une unité de contrôle (24) servant à contrôler les poussoirs (74, 76) et que l'unité de contrôle (24) est configurée de façon à contrôler un déplacement séquentiel des deux poussoirs (74, 76) lors duquel, au moment du déplacement de la cassette (32) située dans la fente réceptrice (30) dans l'unité de sortie (16), elle déplace d'abord le poussoir (74) situé plus proche de l'unité d'insertion (12) et déplacé dans le sens d'empilage (S) et déplace ensuite dans le sens d'empilage opposé (T) le poussoir (76) situé plus éloigné de l'unité d'insertion (12) et déplacé dans le sens d'empilage (S).

9. Dispositif selon l'une quelconque des revendications précédentes, **caractérisé en ce que** l'unité d'insertion (12) et l'unité de lecture (22) sont disposées dans une première partie de boîtier (1) pouvant reposer sur le sol et que l'unité de sortie (16) est disposée dans une deuxième partie de boîtier (2) disposée de façon autoportante à la première partie de boîtier (1).

10. Dispositif selon la revendication 9, **caractérisé en ce que** la deuxième partie de boîtier (2) a la forme d'une sortie disposée dans une zone latérale (3) de la première partie de boîtier (1).

11. Dispositif selon la revendication 10, **caractérisé en ce que** la sortie comprend une extrémité distale et une extrémité proximale par rapport à la première partie de boîtier (1), la hauteur et/ou la profondeur de l'extrémité distale étant inférieure à, respectivement, la hauteur et la profondeur de l'extrémité proximale.

12. Dispositif selon l'une quelconque des revendications précédentes, **caractérisé en ce que** la surface de support inférieure (38) dans la fente réceptrice (30) est adjacente à un troisième plan incliné (36) contre lequel peut reposer la cassette (32) reprise par la fente réceptrice (30) avec son côté large et que l'unité de sortie (16) comprend un quatrième plan incliné (37) contre lequel peut reposer une cassette (42) ayant été déplacée sur la surface de support (39) de l'unité de sortie (16) le long de la surface de support inférieure (38) de la fente réceptrice (30), ledit troisième plan incliné (36) étant disposé en alignement avec le quatrième plan incliné (37).
